# EUROPEAN PATENT APPLICATION

(11) **EP 4 382 279 A1**
(43) Date of publication of application: **12.06.2024**
(21) Application number: 22460066.8
(22) Date of filing: 06.12.2022
(51) Int. Cl.: B29C 49/42

(54) **A SET OF PREFORM MANDREL AND GRIPPER**

(71) Applicant: "TES" Spolka z Ograniczona Odpowiedzialnoscia, 80-180 Kowale (PL)
(72) Inventor: Karaszewski, Waldemar, 81-549 Gdynia (PL); Gosk, Robert, 80-180 Kowale (PL); Pawlowski, Tomasz, 81-589 Gdynia (PL)
(74) Representative: Pomianek, Grazyna

(57) **Abstract**

A set of preform mandrel and gripper, where the outer side surface of the mandrel features at least two movable clasps which end with a tooth, positioned opposite one another and subject to the action of a resilient element, is characterised in that there are two annular protrusions (11) on the outer side surface of the mandrel (4), where the said protrusions are positioned opposite each other so that formed between the tooth (9) of the clasp (8) and the front surface (11a) of the annular protrusion (11) is a slot (12) to accommodate the flange (6) of the preform (5), whereas the gripper (1) of the preform (5) features jaws (2), the arms of which feature recesses (3) for the flange (6) of the preform (5), where one edge (3a) of each recess (3) is arched and copies the shape of the neck (5a) of the preform (5) at the point where this edge (3a) contacts the neck (5a) of the preform (5).

## Description

The invention concerns a mandrel and gripper set for a plastic preform, in particular for a PET preform (where 'PET' stands for polyethylene terephthalate (C₁₀H₈O₄)ₙ), in which the mandrel is intended to hold the preform during the heating process, and the gripper to collect the preform from the mandrel and transport it into the blow mould. The set can be used in particular in a linear blow moulding machine.

In general, preform grippers or holders can be divided into two main categories, namely the devices which couple with the preform neck either on the inside of the preform, or on the outside of the preform. To work, the holders for internal coupling are inserted into the neck section of the preform, whereas the holders for external coupling are placed on the neck section of the preform.

The known grippers are complex in structure and intended for orienting and transporting preforms through various stages for further processing.

Known from the patent document US 4,672,425 is a spindle nose which is internally engaged with the preform. The spindle nose is used for conveying a thermoplastic preform through heating and blow molding stations. The inside diameter of preform is engaged by a portion of the spindle nose, said spindle nose comprising: a base, a locating stud extending from one side of said base, a flexible annular skirt extending from the other side of said base, and an air passage extending completely through said locating stud, base, and flexible skirt.

Known from document WO 02/38353 A1 is an inner-engagement pick-up plug for supporting and transporting preforms of thermoplastic resin, which is adapted to engage respective plastic preforms in view of supporting, orienting and carrying them throughout the various steps which the preforms themselves go through for further processing. The inner-engagement pick-up plug comprises: a central body, engagement means applied to said central body and adapted to engage the neck portion of the preform, in which elastic members are provided on said means so as to press them against the wall of said neck portion, wherein said central body is provided with a plurality of groove-like recesses which open towards the surface thereof that is adapted to engage the neck portion of the respective preform, and said engagement means are constituted by individual and independent gripping members that are housed in respective ones of said groove-like recesses, and said elastic members are constituted by respective springs acting between the inner wall of respective ones of said groove-like recesses and the corresponding opposed wall of said individual and independent gripping members.

Also known from the aforementioned document WO 02/38353 A1 is a outer-engagement pick-up plug for supporting and transporting preforms of thermoplastic resin which comprises: a cylindrical hollow central body, and engagement means applied to said central body and adapted to engage the neck portion of the preform, in which elastic members are provided on said means so as to press them against the wall of said neck portion, and said hollow central body is provided with a plurality of groove-like recesses which open towards the surface thereof that is adapted to engage the neck portion of the respective preform, and said engagement means are constituted by individual and independent gripping members that are housed in respective ones of said groove-like recesses, and said elastic members are constituted by respective springs acting between the inner wall of respective ones of said groove-like recesses and the corresponding opposed wall of said individual and independent gripping members.

Known from document WO 2009/072910 A2 is a preform holder equipped with elastic and clamping members which has a body with an axially running air duct through which air is blown into the preform, and the outer side walls of the body provided with pockets seating mobile-anchored clasps clamped on the body with an elastic clamping ring, with each clasp ending with a tooth which reaches over the seat in the front wall of the holder holding the thin outer flange of the preform and forming a crevice in between the tooth bottom and the seat into which the rim of the flange slips, whereas the inner side wall of the seat has a groove carved to hold the fitting supporting flange formed on the inner wall of the perform neck.

Known from patent document US 4,767,311 is a blow molding apparatus with resilient skirted spindle nose having an article handling system that carries heated preforms by a carriage assembly from an oven to a chain conveyor which moves them to a blow mold from whence the blown product is moved to an eject station. Attached to the chain conveyor are preform holder assemblies each of which contains a resilient spindle nose which supports the preforms by engaging an internal surface at one end of the preform.

The invention solves the problem of collecting the preform from the heating zone and holding it stable when it is transported from the oven to the blow mould, in particular any preform where the neck ends with a flange intended for being connected with the lid so as to achieve hermetic closure, in which the flange must not be damaged during the preform transport to the blow mould.

According to the invention, a set of preform mandrel and gripper, where the outer side surface of the mandrel features at least two movable clasps which end with a tooth, positioned opposite one another and subject to the action of a resilient element, is characterised in that there are two annular protrusions on the outer side surface of the mandrel, where the said protrusions are positioned opposite each other so that formed between the tooth of the clasp and the front surface of the annular protrusion is a slot to accommodate the preform flange, whereas the preform gripper features jaws, the arms of which feature recesses for the preform flange, where one edge of each recess is arched and copies the shape of the preform neck at the point where this edge contacts the preform neck.
Preferably, there are flattenings in between the annular protrusions on the outer side surface of the mandrel, and each of the jaw arms features two elements connected to each other with the said recess formed in between, where one element incorporates the said arched edge of the recess, and the other element incorporates a straight edge.
Preferably, the jaws are opened parallelly.
Preferably, the mandrel features an axial opening.
Preferably, the gripper is fitted with a pneumatic mechanism to adjust the opening of the jaws.

The solution according to this invention enables stable holding of the preform ended with a flange when it is being transported from the heating oven to the blow mould.

The invention in an illustrative embodiment is shown on figures, where:

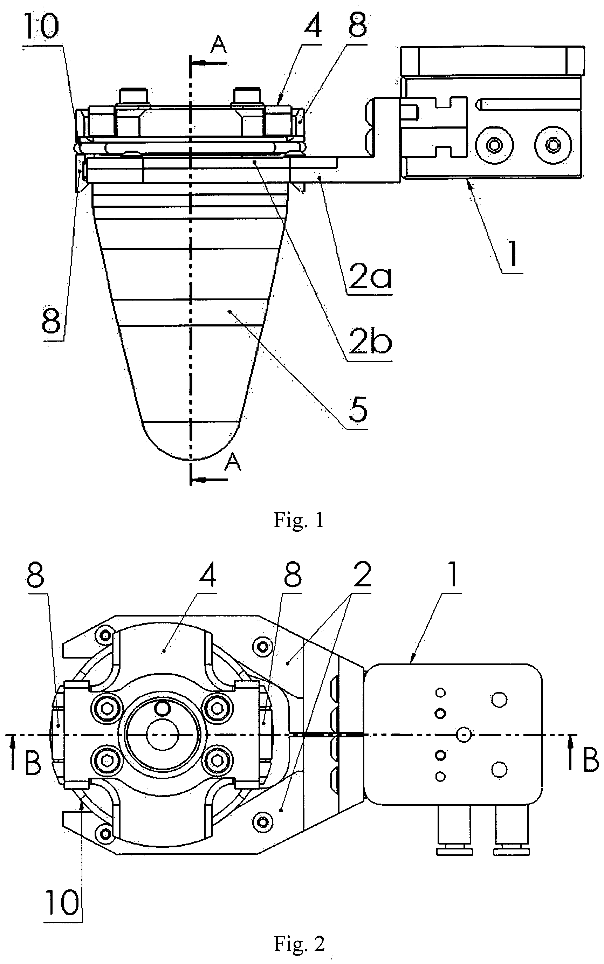

Fig. 1 shows the set with a preform placed on the mandrel and the gripper fitted on the preform, in side view;
Fig. 2 presents the set as in Fig. 1, in bird's eye view;

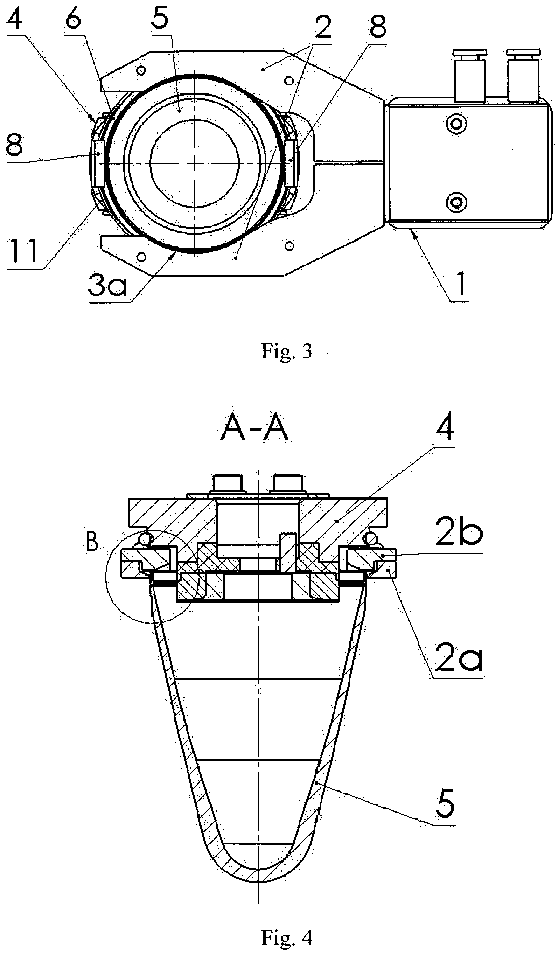

Fig. 3 depicts the set as in Fig. 1, in bottom-side view;
Fig. 4 shows the set in Fig. 1, in a section along the A-A plane;

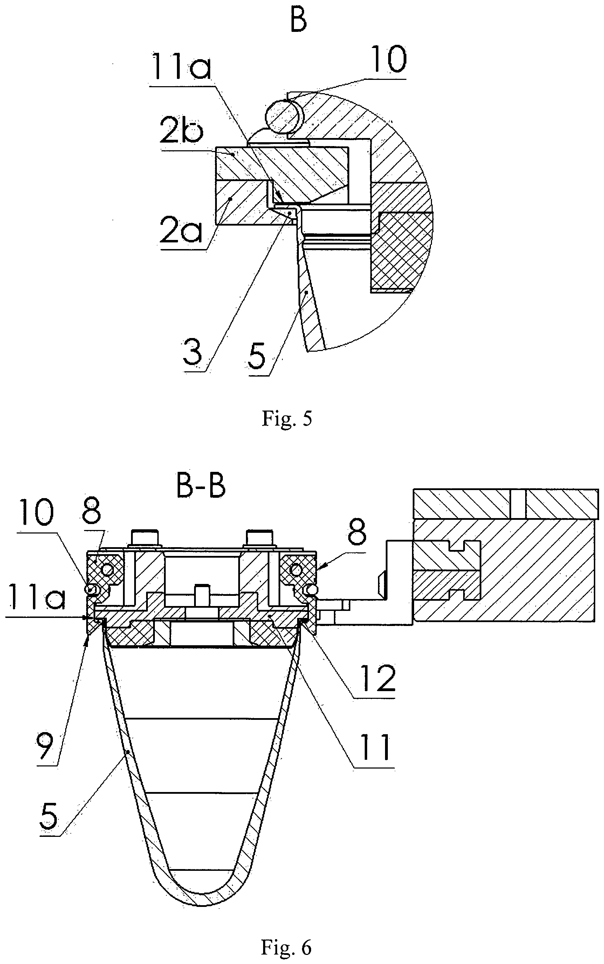

Fig. 5 presents the position of a preform flange in the gripper recess, as in Fig. 4, detail B;
Fig. 6 shows the set as in Fig. 1, with clasps locked on the preform flange, in a section along the B-B plane;

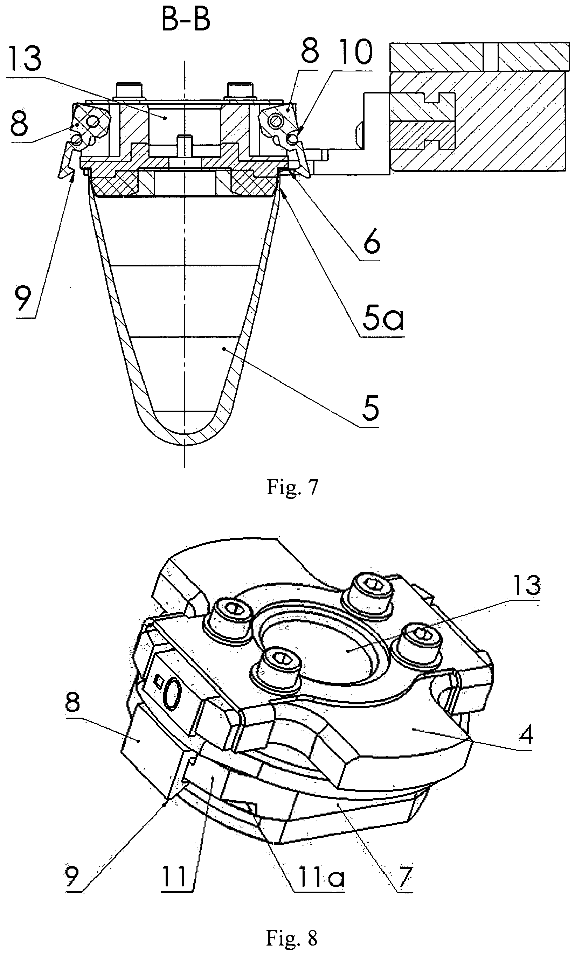

Fig. 7 presents the set as in Fig. 1, with open clasps in a section along the B-B plane;
Fig. 8 presents the mandrel in perspective view;

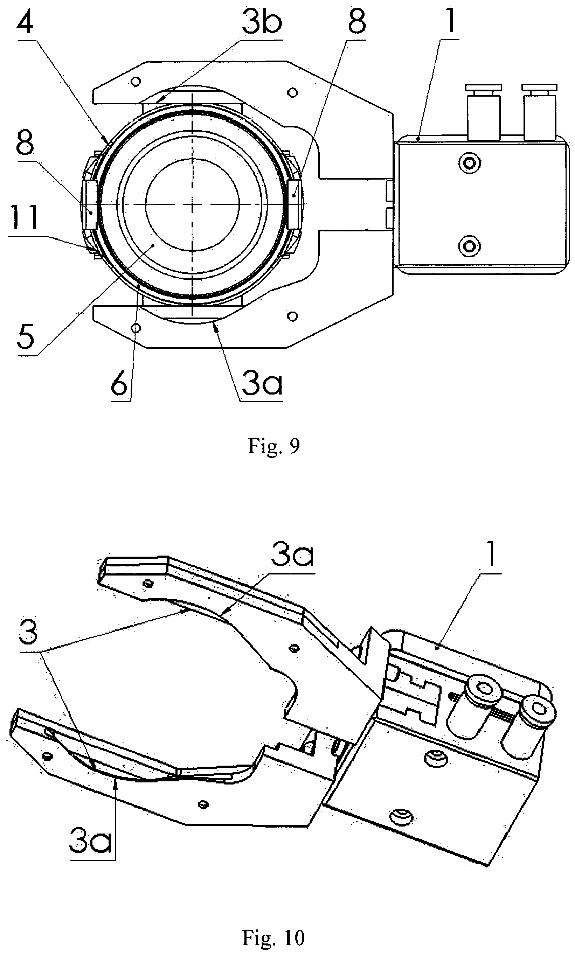

Fig. 9 shows the set as in Fig. 3, with the jaws open, in bottom-side view;
Fig. 10 shows the gripper with the jaws open, in perspective bottom-side view;

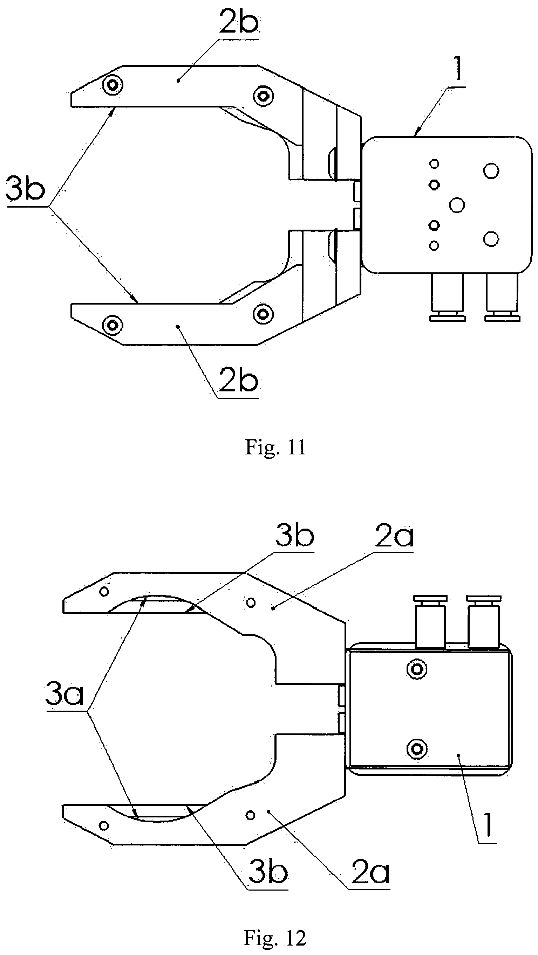

Fig. 11 depicts the gripper with the jaws open, in bird's eye view;
Fig. 12 presents the gripper with the jaws open, in bottom-side view.

An illustrative set incorporates a mandrel 4 and pneumatic gripper 1. The mandrel 4 has an axial opening 13 for connecting the mandrel with the conveyor shaft in the preform heating zone, and on the outer side surface of the mandrel there are two movable clasps 8 which end with a tooth 9, where the clasps are positioned opposite each other and are subject to the action of a resilient element 10 which presses the clasps against the mandrel 4, and with two annular protrusions 11 on the outer side surface, where the protrusions are positioned opposite each other similarly to the movable clasps 8, and where between the tooth 9 of the clasp 8 and the front surface 11a of the annular protrusion 11 is a slot 12 to accommodate the flange 6 of the preform 5, while the outer side surface of the mandrel 4 between the annular protrusions 11 features flattenings 7. The gripper 1 of the preform 5, on the other hand, features jaws 2 opening parallelly, which on their gripping surfaces feature recesses 3 for the flange 6 of the preform 5. Each of the arms of the jaws 2 has two elements 2a, 2b connected to each other, with a recess 3 in between, where one element 2a incorporates the edge 3a of the recess 3, with the edge 3a given an arched shape copying the shape of the neck 5 a of the preform 5 at the point where the edge 3 a contacts the neck 5a of the preform 5, and the other element 2b of the jaws 2 incorporates a straight edge 3b. The gripper 1 is fitted with a pneumatic mechanism to adjust the opening of the jaws 2.
In another embodiment, the gripper jaws can be opened at an angle (not shown on the drawing).

The collection of a preform from the mandrel 4 by the gripper 1 progresses as follows. The jaws 2 of the gripper 1 get opened, the arched edges 3a of the element 1a of the jaws 2 are positioned directly under the flange 6 of the preform 5, and the straight edges 3b of the element 2b of the jaws 2 are positioned parallel to the flattening 7 of the mandrel 4, following which the jaws 2 close and the flange 6 of the preform 5 is inserted into the recesses 3, the arched edges 3a of the element 2a clamp around the neck 5a of the preform 5, and the straight edges 3b of the element 2b of the jaws 2 are located close to the flattenings 7 of the mandrel 4. The preform 5 get coupled with the gripper 1, following which the ends of the clasps 8 ended with the tooth 9 get tilted away from the mandrel 4 in effect of removal of the mandrel from the preform, for example as the result of axial movement of the mandrel 4, or axial movement of the gripper 1 with the preform 5. The released preform 5 from the mandrel 4 is transported by the gripper 1 to the blow mould.
In the case of a ten-cavity blow mould 10 grippers are required for simultaneous transport of 10 preforms from the oven to the blow moulds.

### List of numerical references:

- 1 -: gripper
- 2: - jaws
- 2a, 2b -: jaw elements
- 3 -: recess for the preform flange
- 3a -: arched edge of the recess for the flange
- 3b -: straight edge of the jaws
- 4 -: mandrel
- 5 -: preform
- 5a -: preform neck
- 6 -: preform flange
- 7 -: flattenings
- 8 -: clasps
- 9 -: clasp tooth
- 10 -: resilient element
- 11 -: annular protrusions
- 11a -: front surface of the annular protrusion
- 12 -: slot
- 13 -: axial opening

## Claims

1. A set of preform mandrel and gripper, where the outer side surface of the mandrel features at least two movable clasps which end with a tooth, positioned opposite one another and subject to the action of a resilient element, **characterised in that** there are two annular protrusions (11) on the outer side surface of the mandrel (4), where the said protrusions are positioned opposite each other so that formed between the tooth (9) of the clasp (8) and the front surface (11a) of the annular protrusion (11) is a slot (12) to accommodate the flange (6) of the preform (5), whereas the gripper (1) of the preform (5) features jaws (2), the arms of which feature recesses (3) for the flange (6) of the preform (5), where one edge (3a) of each recess (3) is arched and copies the shape of the neck (5a) of the preform (5) at the point where this edge (3a) contacts the neck (5a) of the preform (5).

2. The set according to Claim 1, **characterised in that** there are flattenings (7) in between the annular protrusions (11) on the outer side surface of the mandrel (4), and each of the jaw arms (2) features two elements (2a, 2b) cormected to each other with the recess (3) formed in between, where one element (2a) incorporates the arched edge (3a) of the recess (3), and the other element (2b) incorporates a straight edge (3b).

3. The set according to Claim 1, **characterised in that** the jaws (2) are opened parallelly.

4. The set according to Claim 1, **characterised in that** the mandrel (4) features an axial opening (13).

5. The set according to Claim 1, **characterised in that** the gripper (1) is fitted with a pneumatic mechanism to adjust the opening of the jaws (2).
